# EUROPEAN PATENT SPECIFICATION

(11) **EP 3 571 585 B1**
(45) Date of publication and mention of the grant of the patent: **04.01.2023**
(21) Application number: 18784559.9
(22) Date of filing: 19.01.2018
(51) Int. Cl.: G06F 9/445, G06F 9/48, G06F 9/50, G06F 1/324

(54) **METHOD AND APPARATUS FOR IMPLEMENTING HETEROGENEOUS FREQUENCY OPERATION AND SCHEDULING TASK OF HETEROGENEOUS FREQUENCY CPU**
VERFAHREN UND VORRICHTUNG ZUR IMPLEMENTIERUNG EINES HETEROGENEN FREQUENZBETRIEBES UND EINER PLANUNGSAUFGABE FÜR EINE HETEROGENE FREQUENZBASIERTE CPU
PROCÉDÉ ET APPAREIL DE MISE EN OEUVRE D'UNE OPÉRATION DE FRÉQUENCE HÉTÉROGÈNE ET DE PLANIFICATION DE TÂCHE DE CPU À FRÉQUENCE HÉTÉROGÈNE

(30) Priority: 20.01.2017 CN 201710045835
(43) Date of publication of application: 27.11.2019
(73) Proprietor: Alibaba Group Holding Limited, Grand Cayman (KY)
(72) Inventor: ZHANG, Xiantao, Yu Hang District 311121 (CN); ZHANG, Yang, Yu Hang District 311121 (CN)
(74) Representative: Finnegan Europe LLP
(86) International application number: PCT/US2018/014542
(87) International publication number: WO 2018/190931

(56) References cited:
- WO-A1-2017/052737
- US-A1- 2012 317 568
- US-A1- 2013 080 814
- US-A1- 2013 111 226
- US-A1- 2013 268 943
- US-A1- 2014 181 501
- US-A1- 2014 189 297
- US-A1- 2014 189 704
- US-A1- 2016 116 954
- US-B1- 7 134 036
- US-B2- 8 245 070

## Description

### TECHNICAL FIELD

The present disclosure relates to the field of computers, and in particular, to a CPU having multiple cores, a method, an apparatus, a computer operating system and a non-transitory computer readable medium for implementing heterogeneous frequencies of a CPU comprising a plurality of cores.

### BACKGROUND

A core is an independent computing unit inside each CPU. The unit is physically independent, and has independent resources. For example, a CPU can physically be divided into a GPU, four cores, a shared L3 cache, a memory controller, and other parts. Each core has respective independent resources such as an L1/L2 cache, a register, a computing part, and an operating frequency, as well as some shared resources such as L3 cache, an uncore clock, etc. Each core of an X86 CPU occupies a same size of physical area.

An X86 CPU can support multiple cores that have a same function. The cores have respective exclusive resources as well as shared resources between them. By configuring different cores differently by software, a frequency of each core can be independently controlled and set, but at the same time it is also limited by a condition (such as temperature, heat dissipation, power consumption, and the like) of the entire CPU. Each core can ensure a reference frequency, and in appropriate situations, can also achieve a higher frequency. The core can operate for a period of time at the higher frequency until certain conditions are triggered (e.g., temperature is too high, power consumption exceeds thermal design power (TDP), and the like). For example, in the solution of Per Core P-State, an assurable frequency is determined according to the headroom (power consumption, heat dissipation, and the like) remaining inside the CPU. This frequency is higher than the reference frequency but lower than the highest frequency. Therefore it's a tradeoff solution. In addition, the frequency is affected by the load of other cores in the same CPU and heat dissipation and power consumption of the entire CPU, and the multiple cores contend freely. Therefore, whether the core can operate at a higher frequency and how long the core can operate at the higher frequency is not guaranteed.

Accordingly, the performance of a multi-core CPU is not stable in situations when demand and requirements of services constantly change. For example, in a scenario of cloud computing, different from a local computing center, network services and storage services thereof need to be implemented by software. In a de-computing system, tasks that software is required to complete include network service, storage service, general services, and the like. The network service and the storage service require better computing capability, such as a higher computing speed, while general services do not require such high computing capability. Better computing capability imposes a higher requirement on operating frequencies of the cores. However, with X86 CPU adopting the aforementioned technology, although some cores thereof can achieve a relatively high frequency, it cannot be guaranteed that the cores continuously operate at the relatively high frequency.

US 2012/317568 A1 describes a heterogeneous processing system which provides a software hypervisor to autonomously control scheduling of operating system thread across the cores, without the awareness or involvement of operating system. US 2014/189704 A1 discloses a processor comprising a first set of physical processor cores having a relatively higher processing performance relative to a second set of physical processor cores. D3= US 2013/268943 A1 describes a multi-core processor comprising a first core configured to operate at a first operating frequency a second core configured to operate at a second operating frequency and a third core configured to operate at a third operating frequency, at least one of the first, second or third operating frequency is different from the others of the first, second, or third operating frequencies.

Under current technologies, each individual core has no fixed operating frequency. Instead, the operating frequency can be increased when allowed by temporal power consumption, heat dissipation, and other conditions. After the increase, the operating frequency can also be reduced due to changes in power consumption and heat dissipation. Therefore, the solution cannot guarantee a constant performance. The core that runs the general services may consume more power when workload of the general services is relatively heavy. As a result, the overall power consumption of the CPU increases, and the operating frequency of the core that runs a storage service has to be reduced in the scenario. Therefore, the existing CPU still needs to be improved.

### SUMMARY OF THE INVENTION

The invention is set out in the appended claims 1 to 12.

The foregoing solution schedules, based on a heterogeneous-frequency CPU, a service to a core whose operating frequency matches the service. Accordingly, the solution can meet the differential performance requirements of services when demand and requirements of services constantly change.

### BRIEF DESCRIPTION OF THE DRAWINGS

**FIG. 1** is a schematic diagram illustrating an exemplary standard operating frequency CPU.
**FIG. 2** is a schematic diagram illustrating an exemplary heterogeneous-frequency CPU, consistent with embodiments of the present disclosure.
**FIG. 3** is a flowchart illustrating an exemplary method for implementing heterogeneous frequencies of a CPU having multiple cores, consistent with embodiments of the present disclosure.
**FIG. 4** is a modular diagram illustrating an exemplary apparatus for implementing heterogeneous frequencies of a CPU having multiple cores, consistent with embodiments of the present disclosure.
**FIG. 5** is a flowchart illustrating an exemplary task scheduling method for implementing heterogeneous frequencies of a CPU having multiple cores, consistent with embodiments of the present disclosure.
**FIG. 6** is a schematic diagram illustrating exemplary units of a task scheduling module for implementing heterogeneous frequencies of a CPU having multiple cores, consistent with embodiments of the present disclosure.

### DETAILED DESCRIPTION

In order to make the objectives, technical solutions, and advantages of the present disclosure more comprehensible, the embodiments of the present disclosure are described in detail in the following with reference to the accompanying drawings. It should be noted that the embodiments in the present application and the features in the embodiments can be mutually combined arbitrarily in the absence of a conflict.

There are conventional solutions of setting and adjusting operating frequencies of cores, such as the solution of Per Core P-State, multiple cores in a same CPU are identical at function and operating frequency. The demand for heterogeneous frequencies of a CPU is not noticed or taken care of. Operating frequencies of core hardware of multi-core CPUs in different generations are generally different, and operating frequencies of multi-core CPUs in next generation designs are generally higher than their precedent generations. However, the existing multi-core CPU cannot meet performance requirements in some scenarios.

The embodiments of the present disclosure provide a heterogeneous-frequency CPU. The CPU includes multiple cores. The multiple cores have a same function but multiple operating frequencies of their hardware, or the operating frequencies of their hardware are not all the same. For example, the multiple cores may be divided into two groups, three groups or four groups. Operating frequencies of cores in a same group can be the same, while operating frequencies of cores in different groups are different.

In addition, in some embodiments, the multiple cores in the CPU may have multiple operating frequencies of hardware, but functions of the cores are the same. The same function is implemented based on a same architecture where circuit units for implementing corresponding functions can be the same. However, it is not necessary that devices and components of these circuit units, as well as performance time, efficiency, and power consumption of these circuit units, are the same. No matter which core performs a task, functions and states of the task are the same, although operating frequencies of cores can be different.

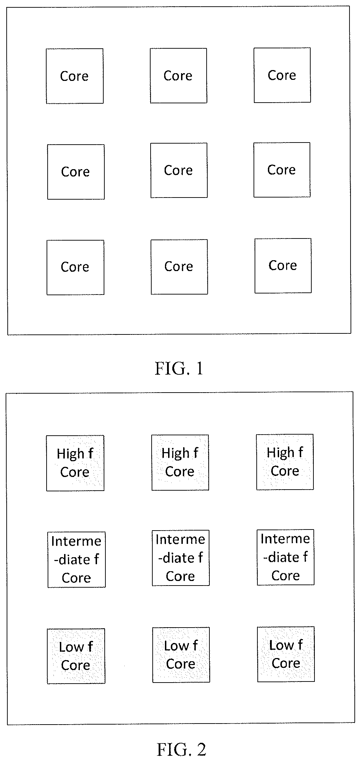

Reference is now made to **FIG. 1****,** which is a schematic diagram illustrating an exemplary standard operating frequency CPU. In **FIG. 1****,** the CPU has nine cores and each of them is configured to work at a standard operating frequency. Each of the nine cores is capable of working at different operating frequencies at different time. It is a configurable method by software. As explained above, however, operating frequencies of these cores can fluctuate based on the resources of the CPU itself. For example, while operating at a reference frequency, each core can spontaneously operate at a higher frequency for some time under certain conditions. But this higher frequency may not always be available because the certain conditions may not last until a requested service is completed, operating frequencies of cores may fluctuate, thereby creating instability within the CPU. Moreover, when a higher frequency is set for one or more cores, other cores can be adversely affected due to contention of resource. Accordingly, this spontaneity can create an unstable CPU. Working at a higher frequency is a transient state that may not last.

The disclosed embodiments overcome the issues of the prior art, by providing a heterogeneous architecture that predetermines different resource configurations for each core. In particular, for each resource configuration, the operating frequencies are set and maintained for each core, thereby providing a more stable CPU by deliberately allocating the CPU's resources across all of the cores.

Reference is now made to **FIG. 2****,** which illustrates an exemplary heterogeneous architecture, consistent with embodiments of the present disclosure. In this exemplary heterogeneous architecture, the CPU has nine cores, in which three are set to work at a higher frequency as high-frequency cores, three are configured to work at an intermediate frequency as intermediate-frequency cores, and the remaining three are configured to work at a lower frequency as low-frequency cores. To maintain the performance of high-frequency cores, the CPU can compress the configured low-frequency cores and normal-frequency cores in terms of power consumption, temperature, and can even compress the overall number of cores of the CPU.

As an example, a high-frequency core has a hardware operating frequency of 133 MHz, an intermediate-frequency core has a hardware operating frequency of 100 MHz, and a low-frequency core has a hardware operating frequency of 66 MHz. In some embodiments, some adjustments of frequencies can be made within a narrow range, but such adjustments are to be limited to avoid overlaps of frequencies between multiple cores working at different categories of operating frequency, to meet different requirements of performance imposed by different tasks. That is, the operating frequencies of the high-frequency cores are maintained at a high-frequency range, the operating frequencies of the intermediate-frequency cores are maintained at an intermediate-frequency range, and the operating frequencies of the low-frequency cores are maintained at a low-frequency range. The terms "high", "intermediate", and "low" here are relative.

In some embodiments, the operating frequencies of the cores are maintained. Frequencies are selected in accordance with specifications of the cores of the CPU, such as power consumption, temperatures, heat dissipation, and other conditions of each core. Therefore, abnormalities such as an excessively high temperature of the CPU are not caused when the cores operate at respective frequencies.

In some embodiments, by selecting cores that have different operating frequencies in a same CPU, stable computing performance can be provided when demand and requirements of services change, and the operating frequencies of the high-frequency cores can be guaranteed even if power consumption and heat dissipation of other cores change. Therefore, high-performance computing service can be maintained.

The foregoing embodiments provide a solution of implementing heterogeneous frequencies by hardware. In these embodiments, heterogeneous frequencies are implemented by software, and heterogeneity is implemented by setting operating frequencies of multiple cores in a CPU by configurations made with software.

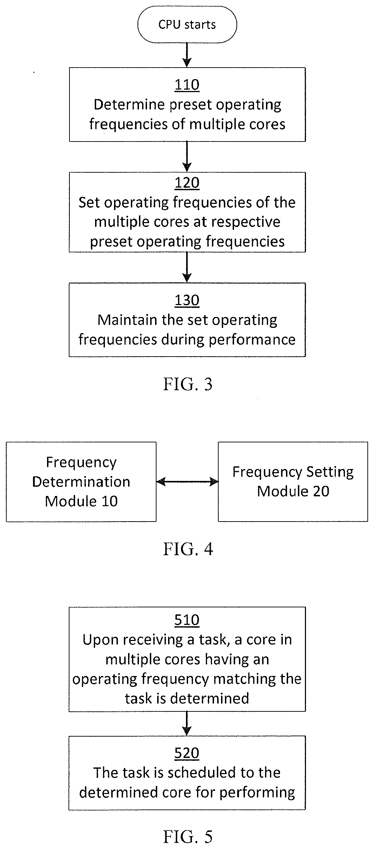

Reference is now made to **FIG. 3****,** which is a flowchart illustrating an exemplary method for implementing heterogeneous frequencies of a CPU having multiple cores, consistent with embodiments of the present disclosure. These embodiments provide a method for implementing heterogeneous frequencies of a CPU. In these embodiments, heterogeneous frequencies of a CPU are implemented by using a setting mechanism. The CPU includes multiple cores, and multiple operating frequencies of the cores can be set.

As shown in **FIG. 3****,** the method includes: presetting operating frequencies, setting multiple cores to work at operating frequencies, and maintaining the set operating frequencies.

In step 110, preset operating frequencies of the multiple cores are determined after the CPU starts. Each of the multiple cores has a preset working frequency and the multiple cores have multiple preset operating frequencies.

In some embodiments, the multiple preset operating frequencies of the multiple cores can be preset in manufacture before delivered to a user. For example, the core could be configured to operate at each of the high, middle, and low frequencies. The presetting of operating frequencies of the multiple cores can be implemented by hardware topology or software configuration, which can be in the form of programmable codes embedded in a non-transitory computer readable medium electrically connected to the CPU when CPU starts.

In some embodiments, the multiple preset operation frequencies of the multiple cores can be set by a user. The presetting of operating frequencies of the multiple cores can be implemented by hardware topology or software configuration such as through a basic input output system (BIOS).

As a result of the presetting of operating frequencies, each of the multiple cores of the CPU is enabled to work at a preset working frequency. Such setting also provides the possibility that the multiple cores are set to work at multiple working frequencies when the CPU receives task requests, according to the working frequencies required by the nature of the tasks.

In step 120, the operating frequencies of the multiple cores are set at respective preset operating frequencies. The multiple cores are maintained at the set operating frequencies during operation. For example, the frequencies may be implemented by adjusting input voltages of the cores. For instance, the input voltage can be increased to ensure that a core's operating frequency can be maintained at a relatively high level. For another core, the input voltage can be lowered, thereby allowing that core to operate at a less modest level.

Although in these embodiments the frequencies of the cores are also set by software, it is different from Per Core P-State. In these embodiments, after the operating frequencies of the cores are preset, these operating frequencies are maintained during the process of operation. The cores operate at the preset operating frequencies. The cores do not contend freely, and are not affected by power consumption and other factors of the CPU chip.

Reference is now made to **FIG. 4****,** which is a modular diagram illustrating an exemplary apparatus for implementing heterogeneous frequencies of a CPU having multiple cores, consistent with embodiments of the present disclosure. As shown in **FIG. 4****,** the apparatus includes a frequency determination module 10 configured to determine preset operating frequencies of the multiple cores after the CPU starts, the multiple cores having multiple preset operating frequencies; and a frequency setting module 20 configured to set the operating frequency of each core of the multiple cores at a respective preset operating frequency, and maintain the multiple cores operating at the set operating frequencies throughout performance of the cores during a resource configuration.

Multiple cores in the CPU can have a same function or different functions.

In these embodiments, heterogeneous frequencies of a CPU are implemented by software setting, and differential computing performance can be provided. The operating frequencies of the high-frequency cores can be guaranteed even if power consumption and heat dissipation of other cores change. Therefore, high-performance computing service can be provided for certain services constantly.

Heterogeneous frequencies of a CPU in the foregoing embodiments are designed to meet differential requirements of services for computing performance. Moreover, the solution of implementing heterogeneous frequencies of a CPU in the foregoing embodiments can guarantee the number of the cores, and meet service demands by providing cores at different frequencies for different service scenarios.

Reference is now made to **FIG. 5****,** which is a flowchart illustrating an exemplary task scheduling method for implementing heterogeneous frequencies of a CPU having multiple cores, consistent with embodiments of the present disclosure. These embodiments provide a task scheduling method based on the aforementioned heterogeneous-frequency CPU implemented by hardware or software. The method is applied to a computer having a CPU with multiple cores, and these multiple cores have multiple operating frequencies. As shown in **FIG. 5****,** the method includes: determining a core having matching operating frequency with a task, and scheduling the task to the determined core to perform.

In step 510, an operating system of the computer determines, upon receiving a task, a core in the multiple cores having an operating frequency matching the task.

In these embodiments, the operating system determines a core of the multiple cores having an operating frequency that matches the task according to a configured corresponding relation between task type and the core. The corresponding relationship between task types and cores may be configured by a user by using an interface provided by the operating system of the computer. In these embodiments, the operating system of the computer does not directly perceive a relationship between working frequencies and received tasks, while the corresponding relationship between task type and core is configured by a user.

In some embodiments, the operating system determines a corresponding relation between task types and cores according to operating frequencies required by task types and the operating frequencies of the multiple cores, and further determines a core of the multiple cores having an operating frequency that matches the operating frequency required by the task in accordance with its task type. In these embodiments, the operating frequencies required by task types may be configured by a user or configured by default values set in manufacture. An algorithm to determine the corresponding relationship between task types and cores can be used in the operating system to confirm the corresponding relationship according to the operating frequencies of the core. A corresponding relationship may be determined and stored in advance. Upon receiving a task, a core in the multiple cores having an operating frequency that matches the task is then determined in accordance with its task type.

Task type of a task may be represented with priority, and different priorities represent different task types. Task type of a task may also be represented directly with service type of a service related to the task, or represented with another defined label, which is not limited in the present disclosure.

In step 520, the operating system schedules the task to the determined core for performing. The operating frequency of the determined core matches the task. For example, a cloud computing server may provide storage service, network service, and other general services. For storage services and network services that have higher requirements on computing performance, tasks related thereto are matched to high-frequency cores or intermediate-frequency cores, while other general services can be matched to low-frequency cores. With the disclosed method, the performance requirements of storage service and network service can be met.

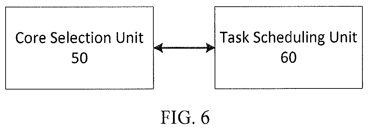

Reference is now made to FIG. 6, which is a schematic diagram illustrating exemplary units of a task scheduling module for implementing heterogeneous frequencies of a CPU having multiple cores, consistent with embodiments of the present disclosure. The multiple cores have multiple operating frequencies, and the computer operating system includes a task scheduling module. As shown in FIG. 6, the task scheduling module includes a core selection unit and a task scheduling unit. Core selection unit 50 is configured to determine, upon receiving a task, a core in the multiple cores having an operating frequency that matches the task. Task scheduling unit 60 is configured to schedule the task to the determined core for performing.

Core selection unit 50 can be configured to determine a core in the multiple cores having an operating frequency that matches the task according to its task type and a corresponding relationship between task types and cores. Core selection unit 50 can also be configured to determine a corresponding relationship between task types and cores according to operating frequencies required by task types and operating frequencies of the multiple cores, and further determine a core in the multiple cores having an operating frequency that matches the task in accordance with its task type.

Based on a heterogeneous-frequency CPU, the disclosed task scheduling module schedules a task to a core having an operating frequency that matches the task. Differential requirements of performance can be met.

Based on foregoing description of embodiments, it is appreciated that the methods of the above embodiments may be implemented by software in combination with hardware or by hardware only. Based on such an understanding, the technical solutions of the embodiments of the present disclosure may be substantially implemented in the form of a software product (which would include any firmware). The computer software product may be stored in a non-transitory computer readable medium (such as a ROM/RAM, a magnetic disk, flash memory, or an optical disk), and include several instructions for instructing a terminal device (which may be a mobile phone, a computer, a server, a network device, and the like) to perform the methods according to the embodiments of the present disclosure.

The disclosed modules/units can be a packaged functional hardware unit designed for use with other components (e.g., portions of an integrated circuit) and/or a part of a program (stored on a computer readable medium) that performs a particular function of related functions. The one or more modules can have entry and exit points and can be written in a programming language, such as, for example, Java, Lua, C, or C++. A software module can be compiled and linked into an executable program, installed in a dynamic link library, or written in an interpreted programming language such as, for example, BASIC, Perl, or Python. It will be appreciated that software modules can be callable from other modules or from themselves, and/or can be invoked in response to detected events or interrupts. Software modules configured for execution on computing devices can be provided on a non-transitory computer readable medium, such as a compact disc, digital video disc, RAM, ROM, flash drive, or any other non-transitory medium, or as a digital download (and can be originally stored in a compressed or installable format that requires installation, decompression, or decryption prior to execution). Such software code can be stored, partially or fully, on a memory device of the executing computing device, for execution by one or more processors. Software instructions can be embedded in firmware, such as an EPROM. It will be further appreciated that hardware modules can be comprised of connected logic units, such as gates and flip-flops, and/or can be comprised of programmable units, such as programmable gate arrays or processors.

The scope of the present application is merely limited by the appended claims.

## Claims

1. A method for implementing heterogeneous frequencies of a CPU comprising a plurality of cores, each core having a plurality of different preset operating frequencies, each preset operating frequency defining an operating frequency of the associated core, the method comprising:
determining the plurality of preset operating frequencies of the plurality of cores after the CPU starts;
determining, from the plurality of different preset operating frequencies associated with each core, a core having a preset operating frequency corresponding to an operating frequency required by a received task,
setting the operating frequency of the determined core at the preset operating frequency required by the received task; and
maintaining the operating frequency of the determined core at the required operating frequency while performing the task on the determined core.

2. The method of claim 1, wherein the plurality of preset operating frequencies of the plurality of cores are preset in manufacture, or set by a user through a basic input output system "BIOS" .

3. The method of claim 1 or 2, wherein at least some of the plurality of cores have a same function.

4. The method of any one of claims 1 to 3, wherein determining the core having the operating frequency corresponding to the operating frequency required of the received task, further comprises:
determining the core having the operating frequency corresponding to the operating frequency required of the received task according to a task type of the received task, and a configured corresponding relationship between task types and cores.

5. The method of any one of claims 1 to 3, wherein determining the core having the operating frequency corresponding to the operating frequency required of the received task, further comprises:
determining a corresponding relationship between task types and cores according to the operating frequencies required by the task types and the preset operating frequencies of the cores; and
determining the core having the operating frequency corresponding to the operating frequency required by the received task, in accordance with the task type of the task.

6. Apparatus for implementing heterogeneous frequencies of a CPU comprising a plurality of cores, each core having a plurality of different preset operating frequencies, each preset operating frequency defining an operating frequency of the associated core, the apparatus comprising:
a frequency determination module (10) configured to determine the preset operating frequencies of the plurality of cores after the CPU starts;
a core selection unit (50) configured to determine, from the plurality of different preset operating frequencies associated with each core, a core having a preset operating frequency corresponding to an operating frequency required of a task received by the CPU; and
a frequency setting module (20) configured to set the operating frequency of the determined core at the preset operating frequency required by the received task, and to maintain the set operating frequency of the determined core at the required operating frequency while performing the task on the determined core.

7. The apparatus of claim 6, wherein at least two of the plurality of cores have a same function.

8. The apparatus of claim 6 or 7, further comprising the CPU comprising the plurality of cores, wherein at least one core is preset to operate and maintain a higher frequency during a resource configuration of the CPU, and at least one other core is preset to operate and maintain a lower frequency during the resource configuration.

9. The apparatus of claim 8, wherein the plurality of cores have a same function and a plurality of different preset hardware operating frequencies.

10. The apparatus of claim 8 or 9, wherein the plurality of cores are divided into two or more groups, and the preset operating frequencies of the cores in the same group are preset to be the same, and the operating frequencies of the cores in different groups are preset to be different.

11. A computer operating system, for use in a computer comprising a CPU comprising a plurality of cores, each core having a plurality of different preset operating frequencies, each preset operating frequency defining an operating frequency of the associated core, the computer operating system when run on the CPU configuring the CPU to carry out the method of any one of claims 1 to 5.

12. A non-transitory computer readable medium comprising a set of executable instructions, which when executed by computer system comprising at least one processor comprising a plurality of cores, causes the computer system to perform the method of any one of claims 1 to 5.

## Patentansprüche

1. Verfahren zum Implementieren heterogener Frequenzen einer CPU, die eine Vielzahl von Kernen umfasst, wobei jeder Kern eine Vielzahl von unterschiedlichen voreingestellten Betriebsfrequenzen aufweist, wobei jede voreingestellte Betriebsfrequenz eine Betriebsfrequenz des zugehörigen Kerns definiert, wobei das Verfahren umfasst:
Bestimmen der Vielzahl von voreingestellten Betriebsfrequenzen der Vielzahl von Kernen nach Starten der CPU;
Bestimmen, aus der Vielzahl von unterschiedlichen voreingestellten Betriebsfrequenzen, die jedem Kern zugehörig sind, eines Kerns mit einer voreingestellten Betriebsfrequenz, die einer für eine empfangene Aufgabe erforderlichen Betriebsfrequenz entspricht,
Einstellen der Betriebsfrequenz des bestimmten Kerns auf die voreingestellte Betriebsfrequenz, die für die empfangene Aufgabe erforderlich ist; und
Halten der Betriebsfrequenz des bestimmten Kerns auf der erforderlichen Betriebsfrequenz, während die Aufgabe auf dem bestimmten Kern durchgeführt wird.

2. Verfahren nach Anspruch 1, wobei die Vielzahl von voreingestellten Betriebsfrequenzen der Vielzahl von Kernen bei der Herstellung voreingestellt wird oder von einem Benutzer über ein Basic Input Output System "BIOS" eingestellt wird.

3. Verfahren nach Anspruch 1 oder 2, wobei zumindest einige der Vielzahl von Kernen eine gleiche Funktion aufweisen.

4. Verfahren nach einem der Ansprüche 1 bis 3, wobei das Bestimmen des Kerns mit der Betriebsfrequenz, die der für die empfangene Aufgabe erforderlichen Betriebsfrequenz entspricht, ferner umfasst:
Bestimmen des Kerns mit der Betriebsfrequenz, die der für die empfangene Aufgabe erforderlichen Betriebsfrequenz entspricht, gemäß einem Aufgabentyp der empfangenen Aufgabe und einer konfigurierten entsprechenden Beziehung zwischen Aufgabentypen und Kernen.

5. Verfahren nach einem der Ansprüche 1 bis 3, wobei das Bestimmen des Kerns mit der Betriebsfrequenz, die der für die empfangene Aufgabe erforderlichen Betriebsfrequenz entspricht, ferner umfasst:
Bestimmen einer entsprechenden Beziehung zwischen Aufgabentypen und Kernen gemäß den für die Aufgabentypen erforderlichen Betriebsfrequenzen und den voreingestellten Betriebsfrequenzen der Kerne; und
Bestimmen des Kerns mit der Betriebsfrequenz, die der für die empfangenen Aufgabe erforderlichen Betriebsfrequenz entspricht, gemäß dem Aufgabentyp der Aufgabe.

6. Vorrichtung zum Implementieren heterogener Frequenzen einer CPU, die eine Vielzahl von Kernen umfasst, wobei jeder Kern eine Vielzahl von unterschiedlichen voreingestellten Betriebsfrequenzen aufweist, wobei jede voreingestellte Betriebsfrequenz eine Betriebsfrequenz des zugehörigen Kerns definiert, wobei die Vorrichtung umfasst:
ein Frequenzbestimmungsmodul (10), das dazu konfiguriert ist, die voreingestellten Betriebsfrequenzen der Vielzahl von Kernen nach Starten der CPU zu bestimmen;
eine Kernauswahleinheit (50), die dazu konfiguriert ist, aus der Vielzahl von unterschiedlichen voreingestellten Betriebsfrequenzen, die jedem Kern zugehörig sind, einen Kern mit einer voreingestellten Betriebsfrequenz zu bestimmen, die einer für eine von der CPU empfangene Aufgabe erforderlichen Betriebsfrequenz entspricht; und
ein Frequenzeinstellmodul (20), das dazu konfiguriert ist, die Betriebsfrequenz des bestimmten Kerns auf die voreingestellte Betriebsfrequenz einzustellen, die für die empfangene Aufgabe erforderlich ist, und die eingestellte Betriebsfrequenz des bestimmten Kerns auf der erforderlichen Betriebsfrequenz zu halten, während die Aufgabe auf dem bestimmten Kern ausgeführt wird.

7. Vorrichtung nach Anspruch 6, wobei mindestens zwei der Vielzahl von Kernen eine gleiche Funktion aufweisen.

8. Vorrichtung nach Anspruch 6 oder 7, ferner umfassend die CPU, welche die Vielzahl von Kernen umfasst, wobei mindestens ein Kern dazu voreingestellt ist, während einer Ressourcenkonfiguration der CPU mit einer höheren Frequenz zu arbeiten und diese zu halten, und mindestens ein anderer Kern dazu voreingestellt ist, während der Ressourcenkonfiguration mit einer niedrigeren Frequenz zu arbeiten und diese zu halten.

9. Vorrichtung nach Anspruch 8, wobei die Vielzahl von Kernen eine gleiche Funktion und eine Vielzahl von unterschiedlichen voreingestellten Hardwarebetriebsfrequenzen aufweist.

10. Vorrichtung nach Anspruch 8 oder 9, wobei die Vielzahl von Kernen in zwei oder mehr Gruppen unterteilt ist und die voreingestellten Betriebsfrequenzen der Kerne in derselben Gruppe derart voreingestellt sind, dass sie gleich sind, und die Betriebsfrequenzen der Kerne in unterschiedlichen Gruppen derart voreingestellt sind, dass sie unterschiedlich sind.

11. Computerbetriebssystem zur Verwendung in einem Computer, umfassend eine CPU, die eine Vielzahl von Kernen umfasst, wobei jeder Kern eine Vielzahl von unterschiedlichen voreingestellten Betriebsfrequenzen aufweist, wobei jede voreingestellte Betriebsfrequenz eine Betriebsfrequenz des zugehörigen Kerns definiert, wobei das Computerbetriebssystem bei Ausführung auf der CPU die CPU dazu konfiguriert, das Verfahren nach einem der Ansprüche 1 bis 5 auszuführen.

12. Dauerhaftes computerlesbares Medium, umfassend einen Satz von ausführbaren Anweisungen, der bei Ausführung durch ein Computersystem, das mindestens einen Prozessor umfasst, der eine Vielzahl von Kernen umfasst, das Computersystem dazu veranlasst, das Verfahren nach einem der Ansprüche 1 bis 5 auszuführen.

## Revendications

1. Procédé permettant la mise en œuvre des fréquences hétérogènes d'une CPU comprenant une pluralité de cœurs, chaque cœur possédant une pluralité de fréquences de fonctionnement préétablies différentes, chaque fréquence de fonctionnement préétablie définissant une fréquence de fonctionnement du cœur associé, le procédé comprenant :
la détermination de la pluralité de fréquences de fonctionnement préétablies de la pluralité de cœurs après le démarrage de la CPU ;
la détermination, à partir de la pluralité de fréquences de fonctionnement préétablies différentes associées à chaque cœur, d'un cœur possédant une fréquence de fonctionnement préétablie correspondant à une fréquence de fonctionnement requise par une tâche reçue,
l'établissement de la fréquence de fonctionnement du cœur déterminé à la fréquence de fonctionnement préétablie requise par la tâche reçue ; et
le maintien de la fréquence de fonctionnement du cœur déterminé à la fréquence de fonctionnement requise tout en réalisant la tâche sur le cœur déterminé.

2. Procédé selon la revendication 1, ladite pluralité de fréquences de fonctionnement préétablies de la pluralité de cœurs étant préétablies lors de la fabrication, ou établies par un utilisateur par l'intermédiaire d'un système élémentaire d'entrée/sortie "BIOS".

3. Procédé selon la revendication 1 ou 2, au moins certains de la pluralité de cœurs possédant une même fonction.

4. Procédé selon l'une quelconque des revendications 1 à 3, ladite détermination du cœur possédant la fréquence de fonctionnement correspondant à la fréquence de fonctionnement requise de la tâche reçue, comprenant en outre :
la détermination du cœur possédant la fréquence de fonctionnement correspondant à la fréquence de fonctionnement requise de la tâche reçue selon un type de tâche de la tâche reçue, et une relation correspondante configurée entre des types de tâche et des cœurs.

5. Procédé selon l'une quelconque des revendications 1 à 3, ladite détermination du cœur possédant la fréquence de fonctionnement correspondant à la fréquence de fonctionnement requise de la tâche reçue, comprenant en outre :
la détermination d'une relation correspondante entre des types de tâches et des cœurs selon les fréquences de fonctionnement requises par les types de tâches et les fréquences de fonctionnement préétablies des coeurs ; et
la détermination du cœur possédant la fréquence de fonctionnement correspondant à la fréquence de fonctionnement requise par la tâche reçue, conformément au type de tâche de la tâche.

6. Appareil destiné à mettre en œuvre des fréquences hétérogènes d'une CPU comprenant une pluralité de cœurs, chaque cœur possédant une pluralité de fréquences de fonctionnement préétablies différentes, chaque fréquence de fonctionnement préétablie définissant une fréquence de fonctionnement du cœur associé, l'appareil comprenant :
un module de détermination de fréquence (10) configuré pour déterminer les fréquences de fonctionnement préétablies de la pluralité de cœurs après le démarrage de la CPU ;
une unité de sélection de cœur (50) configurée pour déterminer, à partir de la pluralité de fréquences de fonctionnement préétablies différentes associées à chaque cœur, un cœur possédant une fréquence de fonctionnement préétablie correspondant à une fréquence de fonctionnement requise d'une tâche reçue par la CPU ; et
un module d'établissement de fréquence (20) configuré pour établir la fréquence de fonctionnement du cœur déterminé à la fréquence de fonctionnement préétablie requise par la tâche reçue, et pour maintenir la fréquence de fonctionnement définie du cœur déterminé à la fréquence de fonctionnement requise tout en réalisant la tâche sur le cœur déterminé.

7. Appareil selon la revendication 6, au moins deux de la pluralité de cœurs présentant une même fonction.

8. Appareil selon la revendication 6 ou 7, comprenant en outre la CPU comprenant la pluralité de cœurs, au moins un cœur étant préétabli pour fonctionner et maintenir une fréquence plus élevée durant une configuration de ressource de la CPU, et au moins un autre cœur étant préétabli pour fonctionner et maintenir une fréquence inférieure durant la configuration des ressources.

9. Appareil selon la revendication 8, ladite pluralité de cœurs présentant une même fonction et une pluralité de fréquences de fonctionnement matérielles préétablies différentes.

10. Appareil selon la revendication 8 ou 9, ladite pluralité de cœurs étant divisée en deux groupes ou plus, et lesdites fréquences de fonctionnement préétablies des cœurs dans le même groupe étant préétablies pour être identiques, et lesdites fréquences de fonctionnement des cœurs dans différents groupes étant préétablies pour être différentes.

11. Système d'exploitation informatique, destiné à être utilisé dans un ordinateur comprenant une CPU comprenant une pluralité de cœurs, chaque cœur possédant une pluralité de fréquences de fonctionnement préétablies différentes, chaque fréquence de fonctionnement préétablie définissant une fréquence de fonctionnement du cœur associé, le système d'exploitation informatique, lorsqu'il fonctionne sur la CPU, configurant la CPU pour effectuer le procédé selon l'une quelconque des revendications 1 à 5.

12. Support lisible par ordinateur non transitoire comprenant un ensemble d'instructions exécutables qui, lorsqu'elles sont exécutées par un système informatique comprenant au moins un processeur comprenant une pluralité de cœurs, amènent le système informatique à réaliser le procédé selon l'une quelconque des revendications 1 à 5.
